# EUROPÄISCHE PATENTSCHRIFT

(11) **EP 1 650 385 B1**
(45) Veröffentlichungstag und Bekanntmachung des Hinweises auf die Patenterteilung: **19.11.2014**
(21) Anmeldenummer: 05022548.1
(22) Anmeldetag: 15.10.2005
(51) Int. Cl.: E05D 7/10, H02B 1/44

(54) **Scharniergelenk**
Hinge
Charnière

(30) Priorität: 22.10.2004 DE 102004051532
(43) Veröffentlichungstag der Anmeldung: 26.04.2006
(73) Patentinhaber: Hager Electro GmbH & Co. KG, 66440 Blieskastel (DE)
(72) Erfinder: Dissel, Klaus, 66131 Saarbrücken (DE); Theuer, Markus, 66131 Saarbrücken (DE); Monzon, Juan, 66125 Dudweiler (DE)
(74) Vertreter: Bernhardt, Reinhold

(56) Entgegenhaltungen:
- WO-A1-82/03421
- DE-A1- 4 034 959
- DE-U1- 29 904 321
- US-A- 3 243 503

## Beschreibung

Die Erfindung betrifft ein Scharniergelenk, insbesondere für die Verbindung einer Abdeckung eines elektrischen Verteilers mit einem die Abdeckung verschließenden Klappdeckel, mit einem ersten Gelenkteil, der einen plattenförmigen Abschnitt aufweist, und einem zu dem ersten Gelenkteil schwenkbeweglichen zweiten Gelenkteil, wobei dererste Gelenkteil mif einem Gelenkachsbolzen verbunden ist, welcher mit wenigstens einem Ende am Rand einer Randaussparung, die in dem plattenförmigen Abschnitt gebildet ist, starr mit dem plattenförmigen Abschnitt verbunden ist und welcher die Randaussparung überspannt, und der zweite Gelenkteil mit einer auf dem Gelenkochsbolzen drehbaren Hülse, die einen Längsschlitz aufweist und den Gelenkachsbolzen über einen Teil seines Umfangs umgreift, verbunden ist.

Ein solches Scharniergelenk geht aus der WO 82/03421 A1 hervor. Über den gesamten Rand eines plattenförmigen Abschnitts eines ersten Gelenkteils ist ein in den Gelenkbolzen bildender Wulst geformt, der sich in ein von einem zweiten Gelenkteils vorgesehenes Lager einsetzen lässt. Das Lager ist durch einen rechtwinklig gebogenen Plattenteil und von dem Plattenteil vorstehende. Haken gebildet, die bei Bewegung der beiden Gelenkteile gegeneinander durch in dem ersten Gelenkteil neben dem Wulst vorgesehene Ausnehmungen eingreifen.

Ein weiteres Scharniergelenk ist aus der US 3,243,503 bekannt, die ein Kabelgehäuse mit einem Deckel beschreibt, der an seinen über das Gehäuse greifenden Abkantungen mit Schlitzen versehen ist, in die ein halbzylindrischer Teil eines außen an dem Gehäuse befestigten Scharnierteils eingreift.

Aus der DE 40 34 959 A1 ist eine Scharnieranordnung zur schwenkbaren Verbindung eines Deckels mit dem Gehäuse eines Bildscanners bekannt. Ein an dem Deckel vorgesehener Gelenkteil umfasst Haken mit einer an seinem distalen Ende angeordneten Lagerschale, die eine zylindrische Lagerausnehmung zur Aufnahme eines Scharnierbolzens aufweist, der einen zweiten Gelenkteil bildet. Der Scharnierbolzen ist über Lagerböcke an dem Gehäuse des Bildscanners befestigt und im Abstand an dem Bildscanner gehalten und weist einen Abschnitt auf, in dem der Scharnierbolzen seitlich abgeflacht ist, sodass er eine verringerte Breite aufweist. Die Breite des abgeflachten Abschnitts ist kleiner als eine Ausnehmung in einer Umfangswand der Lagerschale, sodass der Scharnierbolzen durch den Schlitz in die Lagerschale einführbar ist.

Ein weiteres Scharniergelenk geht aus der DE 299 04 321 hervor.

Ferner sind zweiteilige Scharniergelenke durch Benutzung bekannt.

Der Erfindung liegt die Aufgabe zugrunde, ein Scharniergelenk der eingangs genannten Art zu schaffen, das sich mit geringem Arbeitsaufwand montieren lässt.

Erfindungsgemäß wird diese Aufgabe dadurch gelöst, dass die Plattendicke des plattenförmigen Abschnitts in einem an den Gelenkbolzen angrenzenden Randbereich derart verringert ist, dass sie kleiner als die Breite des Längsschlitzes ist, sodass die Hülse zur Montage unter Eingriff des plattenförmigen Abschnitts in den Längsschlitz der Hülse in Richtung parallel zu dem plattenförmigen Abschnitt und senkrecht zu dem Randbereich des plattenförmigen Abschnitts auf den Randbereich aufsteckbar ist und im aufgesteckten Zustand von dem Randbereich auf den Gelenkachsbolzen verschiebbar ist.

Zweckmäßig ist ein die Verschiebung begrenzender Anschlag vorgesehen.

In weiterer Ausgestaltung der Erfindung ist der Achsbolzen versetzt zur Mittelebene des plattenförmigen Abschnitts angeordnet, z.B. derart, dass die Drehachse mit der Oberfläche des plattenförmigen Abschnitts zusammenfällt.

Auf diese Weise lässt sich ein weiter Schwenkbereich, insbesondere eine Schwenkwinkel um 180°, erreichen.

Die Hülse kann starr mit einem plattenförmigen Abschnitt des zweiten Gelenkteils verbunden sein, wobei ggf. auch die Achse der Hülse versetzt zur Mittelebene dieses plattenförmigen Abschnitts angeordnet ist.

In einer Ausführungsform der Erfindung kann der plattenförmige Abschnitt des zweiten Gelenkteils über einen zur Befestigung der Abdeckung an dem Verteiler dienenden Bolzen mit der Abdeckung verbindbar sein. Vorteilhaft erfüllt der Bolzen in diesem Fall eine Doppelfunktion.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine Abdeckung eines elektrischen Verteilers, welche über Scharniergelenke nach der Erfindung mit einem Klappdeckel verbunden ist,
- Fig. 2: den von der Abdeckung abgenommenen Klappdeckel von Fig. 1,
- Fig. 3: ein Gelenkteil der Scharniergelenke in verschiedenen perspektivischen Darstellungen,
- Fig. 4 eine: Teilansicht der Abdeckung mit dem Klappdeckel von Fig. 1, welche einen Schnitt durch eines der Scharniergelenke nach der Erfindung zeigt,
- Fig. 5 ein: weiteres Gelenkteil zeigende Teilansichten des Klappdeckels von Fig. 1 in verschiedenen perspektivischen Darstellungen, und
- Fig. 6 und 7: die Montage eines Scharniergelenks nach der Erfindung erläuternde Darstellungen.

Eine Abdeckung 1 für einen elektrischen Verteiler ist über Scharniergelenke 2 mit einem Klappdeckel 3 verbunden, durch welchen die Frontseite der Abdeckung 1 verschließbar ist. Der mit einem Griff 4 versehene Klappdeckel 3 rastet an der Abdeckung 1 lösbar ein.

Die Scharniergelenke 2 weisen jeweils einen ersten Gelenkteil 5 auf, welcher an einer Randabwinklung 6 des Klappdeckels 3 gebildet ist.

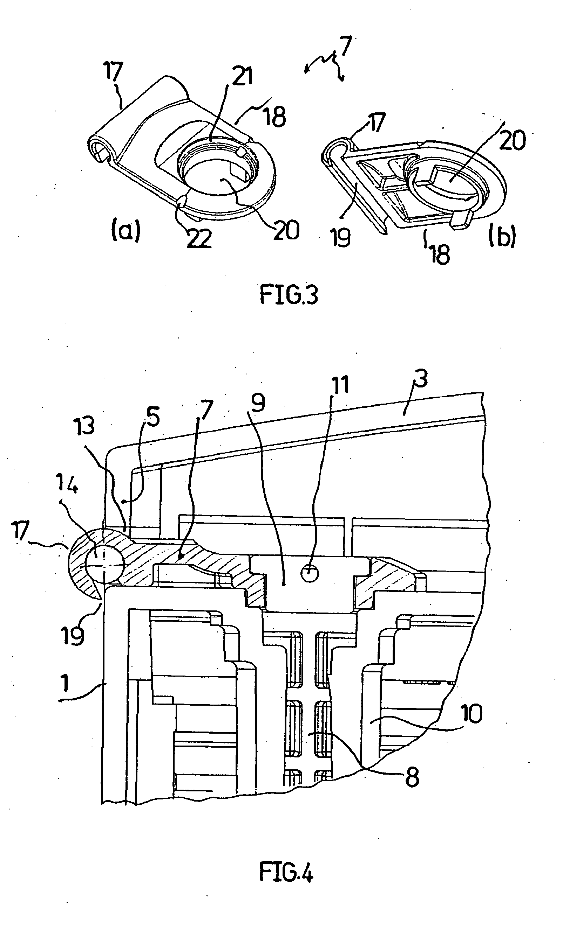

Mit dem ersten Gelenkteil 5 schwenkbeweglich verbindbar ist ein zweiter Gelenkteil 7, welcher über einen Bolzen 8, welcher ferner der Befestigung der Abdeckung 1 am Verteiler dient, mit der Abdeckung 1 verbunden ist, wie insbesondere Fig. 4 erkennen lässt. Der Bolzen 8 mit einem Kopf 9 ist in einen einstückig mit der Abdeckung 1 verbundenen Führungsschacht 10 eingeführt und weist einen Durchgang 11 für einen Plombierdraht auf.

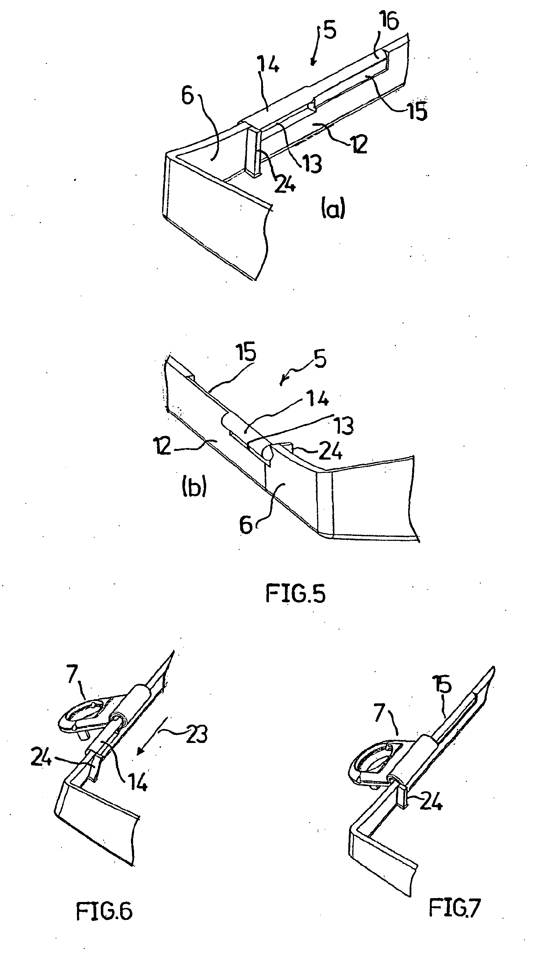

Der in Fig. 5 gesondert dargestellte erste Gelenkteil 5 weist einen durch die Abwinklung 6 gebildeten plattenförmigen Abschnitt 12 mit einer Randaussparung 13 auf, welche von einem an beiden Enden starr mit dem Rand der Aussparung 13 verbundenen, im Querschnitt kreisrunden Gelenkachsbolzen 14 überspannt ist.

Angrenzend an den einstückig an den plattenförmigen Abschnitt 12 angeformten Gelenkachsbolzen 14 bzw. an die Randaussparung 13 ist in dem plattenförmigen Abschnitt 12 ein Randbereich 15 vorgesehen, in welchem die Plattendicke verringert und ein abgerundeter Randbereich 16 gebildet ist.

Wie insbesondere Fig. 3 erkennen lässt, weist der zweite Gelenkteil 7 einen Hülsenabschnitt 17 und einen mit dem Hülsenabschnitt 17 einstückig verbundenen, etwa plattenförmigen Abschnitt 18 auf.

Der Hülsenabschnitt 17 ist mit einem Längsschlitz 19 versehen. Der plattenförmige Abschnitt 18 weist eine Durchgangsöffnung 20 mit einer Einsenkung 21 auf, welche einen Sitz für den Kopf 9 des Befestigungsbolzens 8 bildet. An der Einsenkung 21 einander diametral gegenüberliegende Durchgänge 22 dienen der Aufnahme des den Durchgang 11 des Bolzenkopfs 9 durchsetzenden Plombierdrahts.

Zur Montage der Scharniergelenke wird gemäß Fig. 6 der zweite Gelenkteil 7 auf den in der Dicke verringerten Randbereich 15 des ersten Gelenkteils 5 aufgesteckt, wobei der zweite Gelenkteil die in Fig. 6 gezeigte Schwenkposition einnimmt. Der zweite Gelenkteil 7 lässt sich nun gemäß Pfeil 23 in Richtung zu dem Gelenkachsbolzen 14 bewegen und auf den Gelenkachsbolzen 14 bis zu einem Anschlag 24 aufschieben. In der aufgeschobenen Position bietet die Randausnehmung 13 Freiraum zur Verschwenkung des zweiten Gelenkteils 7.

Wie Fig. 4 erkennen lässt, ist in der geschlossenen Position des Klappdeckels 3 der Längsschlitz 19 des Hülsenabschnitts 17 des zweiten Gelenkteils 7 durch die Abdeckung 1 verschlossen.

Der Gelenkachsbolzen 14 ist zur Mittelebene des plattenförmigen Abschnitts 12 des Gelenkteils 5 derart versetzt angeordnet, dass eine Verschwenkung des Klappdeckels 3 um 180° möglich ist.

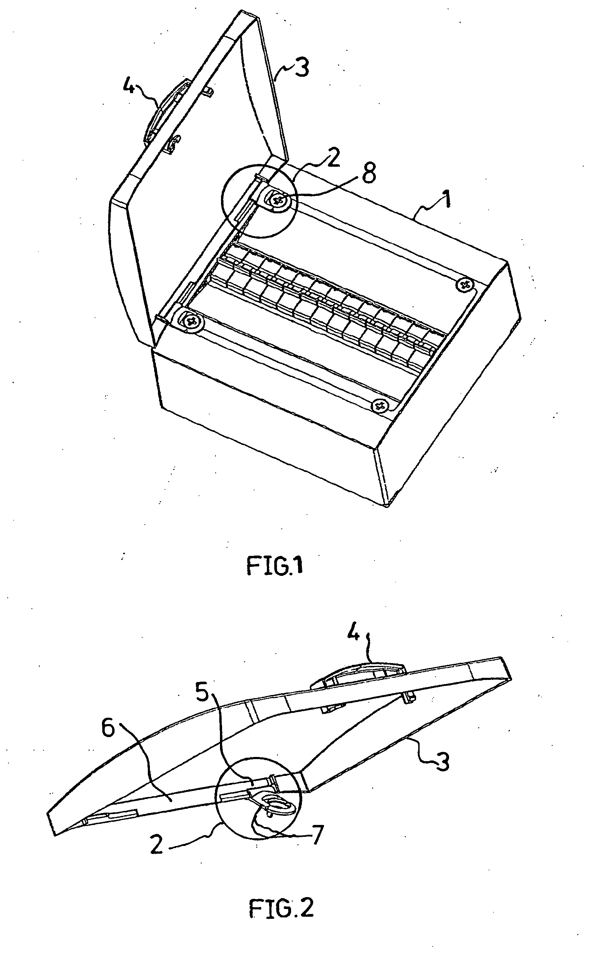

Die Anschläge 24 der beiden in Fig. 1 gezeigten Scharniergelenke 2, welche zueinander spiegelbildlich angeordnet sind, verhindern, dass sich der Klappdeckel 3 in Richtung der Gelenkachse verschieben lässt, wenn der Längsschlitz 19 in einer Schwenkstellung zu dem plattenförmigen Abschnitt 12 ausgerichtet ist.

Die Bolzen 8 erfüllen in dem gezeigten Ausführungsbeispiel eine Doppelfunktion, indem sie einerseits die Abdeckung 1 am Verteiler und andererseits die zweiten Gelenkteile 7 an der Abdeckung festgehalten. Durch den Plombierdraht, welcher durch die Durchgangsöffnung 22 geführt ist, erfolgt auch eine Plombierung des Klappdeckels.

## Patentansprüche

1. Scharniergelenk, insbesondere für die Verbindung einer Abdeckung (1) eines elektrischen Verteilers mit einem die Abdeckung verschließenden Klappdeckel (3), mit einem ersten Gelenkteil (5), der einen plattenförmigen Abschnitt (12) aufweist, und einem zu dem ersten Gelenkteil (5) schwenkbeweglichen zweiten Gelenkteil (7), wobei der erste Gelenkteil (5) mit einem Gelenkachsbolzen (14) verbunden ist, welcher mit wenigstens einem Ende am Rand einer Randaussparung (13), die in dem plattenförmigen Abschnitt (12) gebildet ist, starr mit dem plattenförmigen Abschnitt (12) verbunden ist und welcher die Randaussparung (13) überspannt, und der zweite Gelenkteil (7) mit einer auf dem Gelenkachsbolzen (14) drehbaren Hülse (17), die einen Längsschlitz (19) aufweist und den Gelenkachsbolzen (14) über einen Teil seines Umfangs umgreift, verbunden ist,
**dadurch gekennzeichnet,**
**dass** die Plattendicke des plattenförmigen Abschnitts (12) in einem an den Gelenkachsbolzen (14) angrenzenden Randbereich derart verringert ist, dass sie kleiner als die Breite des Längsschlitzes (19) ist, sodass die Hülse (17) zur Montage unter Eingriff des plattenförmigen Abschnitts (12) in den Längsschlitz (19) der Hülse (17) in Richtung parallel zu dem plattenförmigen Abschnitt (12) und senkrecht zu dem Randbereich (15) des plattenförmigen Abschnitts (12) auf den Randbereich (15) aufsteckbar ist und im aufgesteckten Zustand von dem Randbereich (15) auf den Gelenkachsbolzen (14) verschiebbar ist.

2. Scharniergelenk nach Anspruch 1,
**dadurch gekennzeichnet,**
**dass** der Gelenkachsbolzen (14) versetzt zur Mittelebene des plattenförmigen Abschnitts (12) angeordnet ist.

3. Scharniergelenk nach Anspruch 1 oder 2,
**dadurch gekennzeichnet,**
**dass** der zweite Gelenkteil (7) gegen einen Anschlag (24) verschiebbar ist.

4. Scharniergelenk nach einem der Ansprüche 1 bis 3,
**dadurch gekennzeichnet,**
**dass** die Hülse (17) starr mit einem plattenförmigen Abschnitt (18) des zweiten Gelenkteils (7) verbunden ist.

5. Scharniergelenk nach Anspruch 4,
**dadurch gekennzeichnet,**
**dass** die Hülse (17) versetzt zur Mittelebene des plattenförmigen Abschnitts (18) des zweiten Gelenkteils (7) angeordnet ist.

6. Scharniergelenk nach Anspruch 4 oder 5,
**dadurch gekennzeichnet,**
**dass** der plattenförmige Abschnitt (18) des zweiten Gelenkteils (7) über einen der Befestigung der Abdeckung (1) an dem Verteiler dienenden Bolzen (8) mit der Abdeckung (1) verbindbar ist.

## Claims

1. Hinge joint, in particular for connecting a covering (1) of an electric distributor to a swing-action lid (3) which closes the covering, having a first joint part (5), which has a plate-like portion (12), and a second joint part (7), which can be pivoted in relation to the first joint part (5), wherein the first joint part (5) is connected to a hinge pin (14) which has at least one end connected rigidly to the plate-like portion (12) at the periphery of a peripheral aperture (13), formed in the plate-like portion (12), and which spans the peripheral aperture (13), and the second joint part (7) is connected to a sleeve (17) which can be rotated on the hinge pin (14), has a longitudinal slot (19) and engages over the hinge pin (14) over part of its circumference,
**characterized**
**in that** the thickness of the plate-like portion (12) is reduced in a peripheral region adjacent to the hinge pin (14) such that it is smaller than the width of the longitudinal slot (19), and therefore, for installation purposes, the sleeve (17) can be plugged onto the peripheral region (15), with the plate-like portion (12) engaging in the longitudinal slot (19) of the sleeve (17) in the process, in the direction parallel to the plate-like portion (12) and perpendicular to the peripheral region (15) of the plate-like portion (12) and, in the plugged-on state, can be displaced from the peripheral region (15) onto the hinge pin (14).

2. Hinge joint according to Claim 1,
**characterized**
**in that** the hinge pin (14) is offset in relation to the centre plane of the plate-like portion (12).

3. Hinge joint according to Claim 1 or 2,
**characterized**
**in that** the second joint part (7) can be displaced against a stop (24).

4. Hinge joint according to one of Claims 1 to 3,
**characterized**
**in that** the sleeve (17) is connected rigidly to a plate-like portion (18) of the second joint part (7).

5. Hinge joint according to Claim 4,
**characterized**
**in that** the sleeve (17) is offset in relation to the centre plane of the plate-like portion (18) of the second joint part (7).

6. Hinge joint according to Claim 4 or 5,
**characterized**
**in that** the plate-like portion (18) of the second joint part (7) can be connected to the covering (1) via a pin (8) which serves for fastening the covering (1) on the distributor.

## Revendications

1. Charnière, en particulier pour la liaison d'un coffret (1) d'un distributeur électrique avec un couvercle rabattable (3) qui referme le coffret, comprenant une première partie de charnière (5) qui comporte une portion (12) en forme de plaque, et une seconde partie de charnière (7) mobile en pivotement par rapport à la première partie de charnière (5), dans laquelle la première partie de charnière (5) est reliée à un goujon (14) formant axe de charnière, lequel est relié, avec au moins une extrémité à la bordure d'un évidement de bordure (13) qui est formé dans la portion (12) en forme de plaque, de manière rigide avec la portion en forme de plaque (12) et lequel coiffe l'évidement de bordure (13), et la seconde partie de charnière (7) est reliée à une douille (17) capable de rotation sur le goujon (14) formant axe de charnière, douille qui comporte une fente longitudinale (19) et qui entoure le goujon (14) formant axe de charnière sur une partie de sa périphérie,
**caractérisée en ce que**
l'épaisseur de plaque de la portion (12) en forme de plaque est réduite dans une zone de bordure adjacente au goujon (14) formant axe de charnière de telle façon qu'elle est plus petite que la largeur de la fente longitudinale (19), de sorte que pour le montage la douille (17) est capable d'être enfichée sur la zone de bordure (15) en engageant la portion (12) en forme de plaque dans la fente longitudinale (19) de la douille (17) dans une direction parallèle à la portion (12) en forme de plaque et perpendiculaire à la zone de bordure (15) de la portion (12) en forme de plaque et, dans la situation enfichée, la douille est déplaçable depuis la zone de bordure (15) jusque sur le goujon (14) formant axe de charnière.

2. Charnière selon la revendication 1,
**caractérisée en ce que** le goujon (14) formant axe de charnière est agencé de façon décalée vers le plan médian de la portion (12) en forme de plaque.

3. Charnière selon la revendication 1 ou 2,
**caractérisée en ce que** la seconde partie de charnière (7) est déplaçable jusque contre une butée (24).

4. Charnière selon l'une des revendications 1 à 3,
**caractérisée en ce que** la douille (17) est reliée de façon rigide avec une portion en forme de plaque (18) de la seconde partie de charnière (7).

5. Charnière selon la revendication 4,
**caractérisée en ce que** la douille (17) est agencée de façon décalée par rapport au plan médian de la portion en forme de plaque (18) de la seconde partie de charnière (7).

6. Charnière selon la revendication 4 ou 5,
**caractérisée en ce que** la portion en forme de plaque (18) de la seconde partie de charnière (7) est capable d'être reliée au coffret (1) au moyen d'un goujon (8) servant à la fixation du coffret (1) sur le distributeur.
